# EUROPEAN PATENT APPLICATION

(11) **EP 3 674 557 A1**
(43) Date of publication of application: **01.07.2020**
(21) Application number: 19219255.7
(22) Date of filing: 23.12.2019
(51) Int. Cl.: F04D 17/16, F04D 25/06, F04D 29/62

(54) **MOTOR ASSEMBLY FOR AN ELECTRIC BLOWER WITH MOUNTING VERSATILITY**

(30) Priority: 24.12.2018 IT 201800020980
(71) Applicant: Denso Thermal Systems Spa, 10046 Poirino, (TO) (IT)
(72) Inventor: GIGLIOTTI, Paolo, I-10046 POIRINO (Torino) (IT)
(74) Representative: Vanzini, Christian

(57) **Abstract**

A motor assembly for an electric blower, com-prising
- an interface support (210) configured to be fixed to a housing (H) of the electric blower and a cover (220) fixed to the interface support (210), the interface support (210) and the cover (220) cooperating to define a containment space,
- a brushless motor (230) arranged within the containment space.

The interface support (210) has a circular shape provided with a radial extension corresponding to a cooling air duct (214). Associated with the interface support (210) is an adapter (290) provided with fastening members (291) for fastening the adapter (290) to the housing (H) of the electric blower, the adapter having a seat (292) suitable for to receive the interface support (210), wherein the adapter (290) is configured to axially clamp a peripheral region of the interface support (210) against the housing (H) of the electric blower to hold the motor assembly to the housing of the electric blower.

## Description

The present invention relates in general to electric motors for electric blowers, in particular for applications on vehicles.

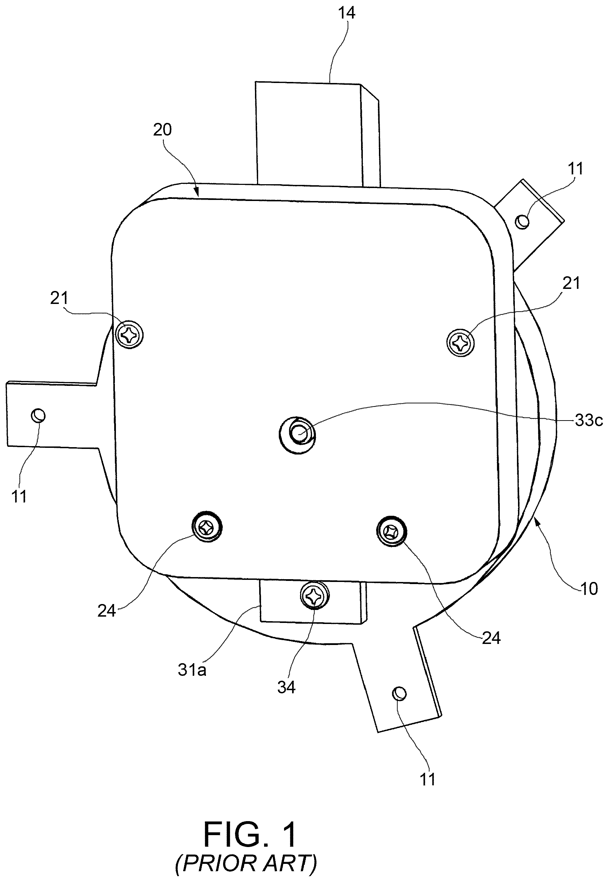

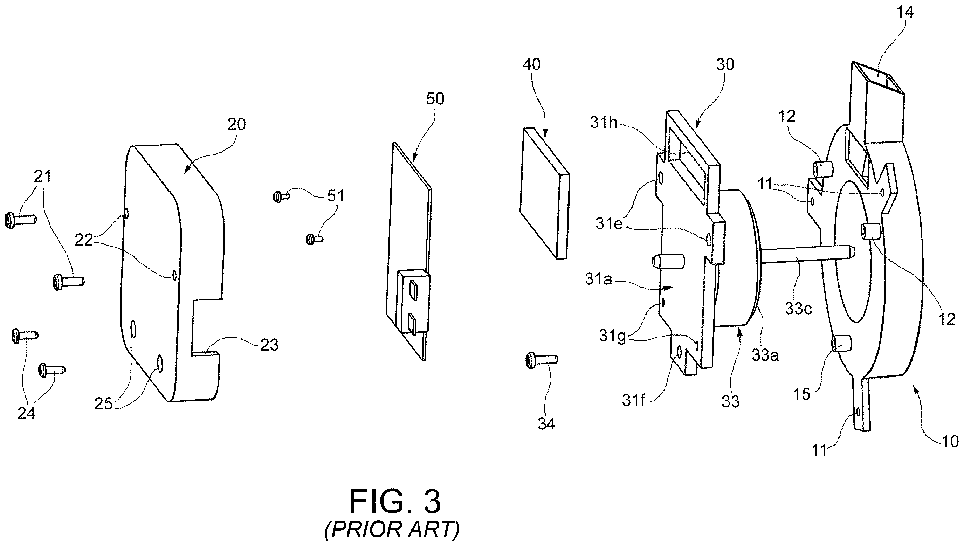

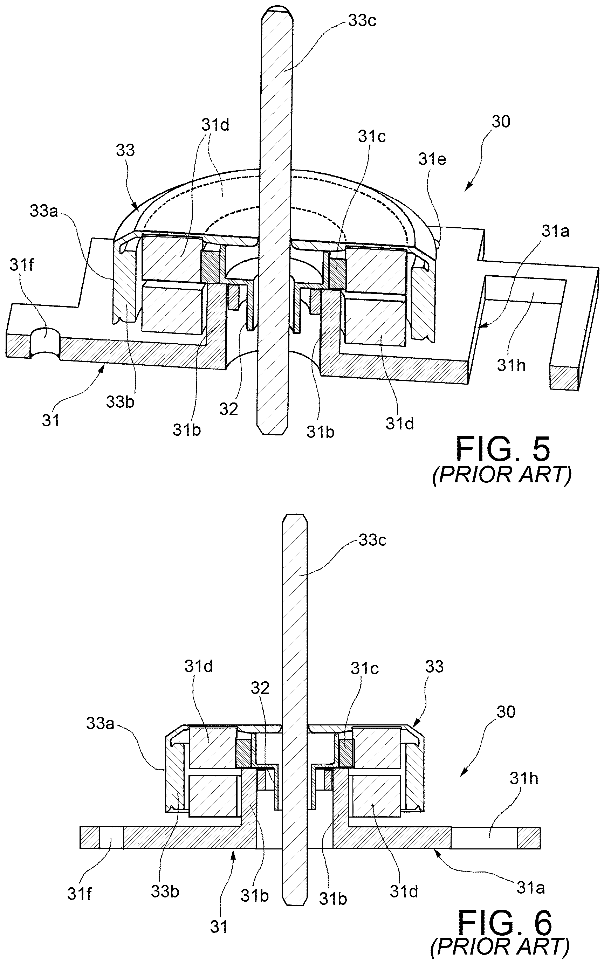

A first known motor assembly is shown in figures 1 to 6.

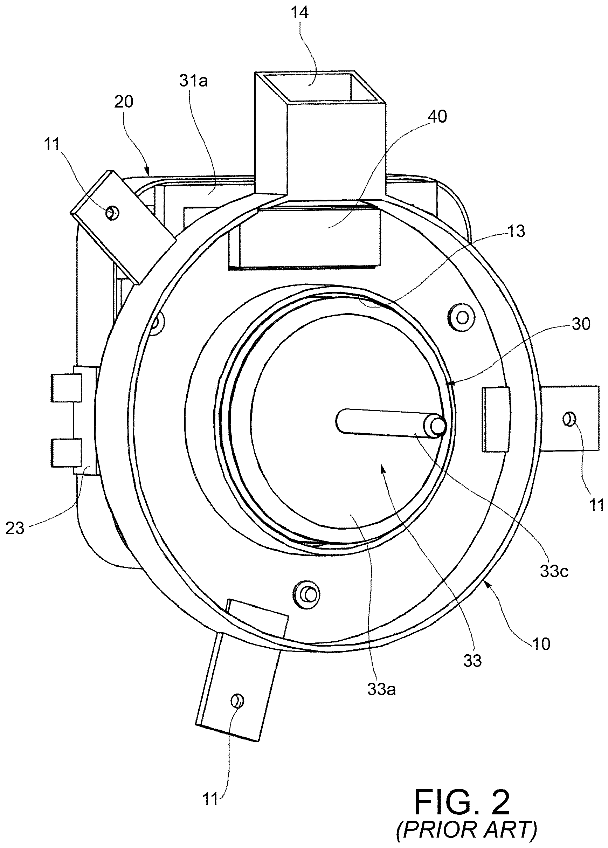

The motor assembly of figures 1-6 comprises an interface support 10 made of plastic material, configured to be fixed to the housing of an electric blower (not shown). For this purpose the interface support 10 has fixing formations in which through holes 11 are formed for receiving screws (not shown) for fixing the motor assembly to the electric blower housing. A central opening 13 is also formed through the interface support 10, visible for example in figure 2.

The figures also show a duct 14 for the passage of cooling air, also formed in the interface support 10.

The assembly of figures 1-3 also comprises a cover 20 of plastic material, fixed to the interface support 10 by means of screws 21, which are inserted through through holes 22 made in the cover 20, and engage threaded holes 12 formed on the interface support 10.

A seat 23 is also provided on the cover 20, adapted to receive an electrical connector.

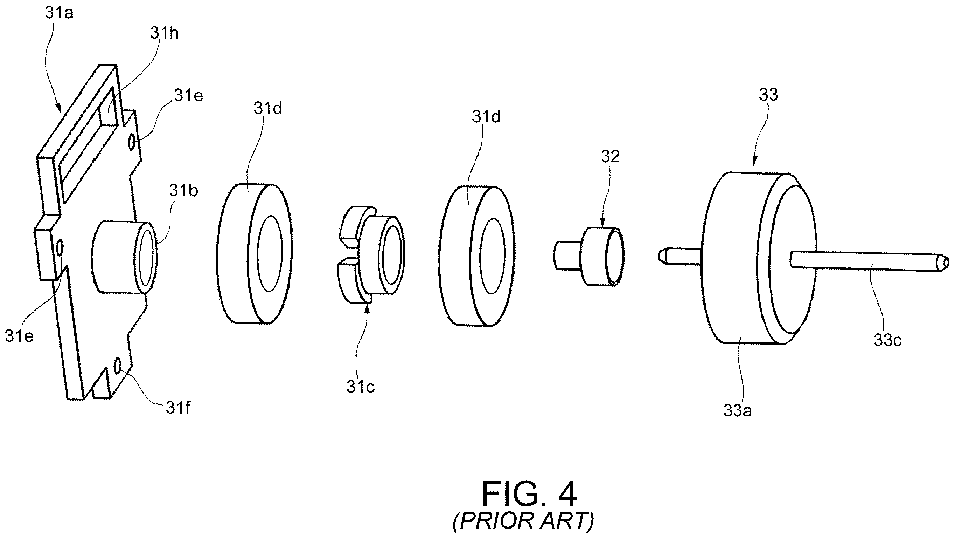

The interface support 10 and the cover 20 cooperate to define a containment space, inside which a brushless motor 30 is arranged, an exploded view of which is shown in figure 4.

The brushless motor 30 comprises a stator 31 comprising a stator body and a stator winding (not shown) carried by the stator body. The stator body comprises a support plate 31a of plastic material, on which a mounting pin 31b having a through hole is formed. An insert 31c of elastomeric material is mounted on the mounting pin 31b. On the insert 31c two winding support parts 31d are mounted, of insulating material, on which the stator winding (not shown) is arranged. The stator body therefore comprises the support plate 31a, the insert 31c and the winding support parts 31d. The support plate 31a gives structural solidity to the stator body.

The brushless motor 30 further comprises a rotor 33, which comprises a bell body 33a which surrounds the mounting pin 31b of the support plate 31a, and on which permanent magnets 33b are arranged. The rotor 33 also comprises a shaft 33c integral in rotation with the bell body 33a. The shaft 33c is configured for mounting an electric blower impeller (not shown). As can be seen for example in figure 2, the rotor 33 projects in part through the opening 13 formed in the interface support 10. The rotor 33 is mounted in rotation on the support plate 31a, through the shaft 33c which is inserted in a bearing-holder bush 32 mounted in the through hole formed in the mounting pin 31b of the support plate 31a.

The support plate 31a, and therefore the entire motor 30, is fixed to the interface support 10 through the screws 21 which are inserted in through holes 31e formed in the support plate 31a. The support plate 31a is also fixed to the interface support 10 through a screw 34 inserted in a through hole 31f formed in the support plate 31a and engaging a threaded hole 15 formed on the interface support 10. Moreover, the cover 20 is fixed to the support plate 10 through screws 24 inserted in through holes 25 formed in the cover 20 and engaging threaded holes 31g formed on the support plate 31a.

The assembly further comprises a heat dissipation plate 40 of metal material, fixed to the support plate 31a at a window 31h formed in the support plate 31a, arranged facing the duct 14 for the cooling air.

Finally, the assembly comprises an electronic control plate 50, provided with circuits for managing the electric motor 30. The electronic control board 50 is fixed to the heat dissipation plate 40 by means of screws 51.

In the group described above, the motor 30 extends transversely by a significant extent beyond the diameter of the rotor 33, due to the support plate 31a which supports the dissipation plate 40 arranged offset with respect to the shaft 33c (see in particular figure 2). This transverse encumbrance may prevent the application of the assembly described above in installation situations where the available space is reduced.

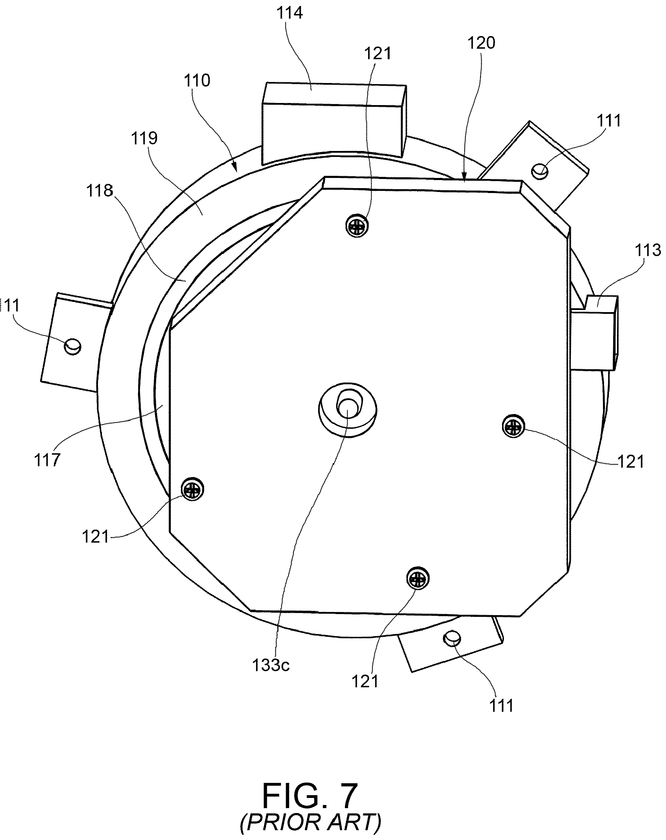

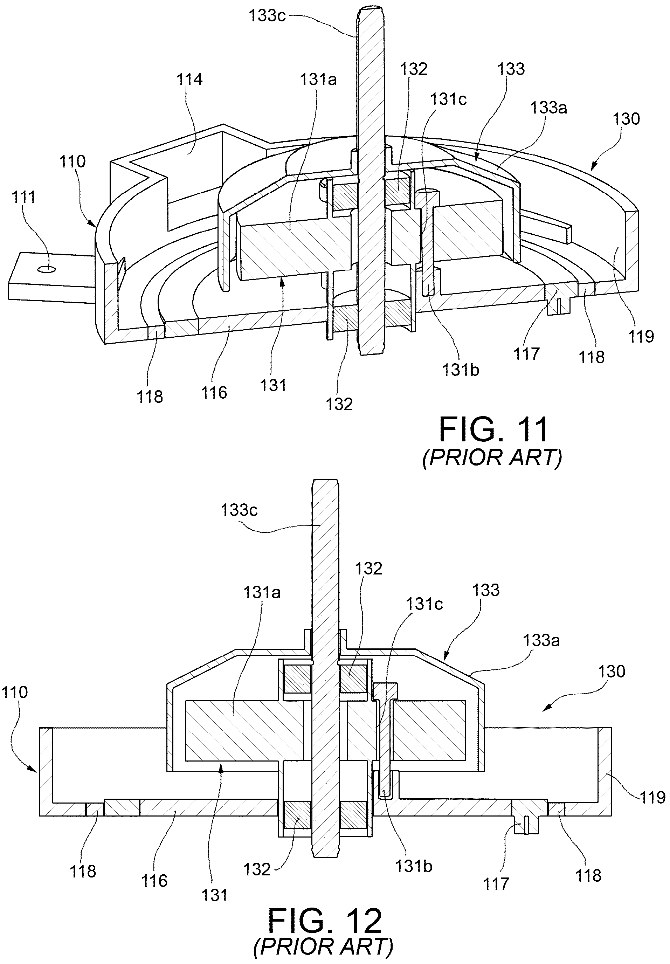

A second known motor assembly is shown in figures 7 to 12.

The motor assembly of figures 7-12 comprises an interface support 110, configured to be fixed to the housing of an electric blower (not shown). For this purpose the interface support 110 has fixing formations in which through holes 111 are formed for receiving screws (not shown) for fixing the motor assembly to the electric blower housing.

The figures also show a duct 114 for the passage of cooling air, also formed in the interface support 110.

The interface support 110 is a monolithic structural element formed by three materials. In particular, the interface support 110 comprises a central part 116 of metallic material. From the central part 116 an intermediate part 117 of plastic material extends, which is peripherally surrounded by an anti-vibration part 118 of elastomeric material. Finally, a peripheral part 119 of the same material as the intermediate part 117 extends from the anti-vibration part 118 of the interface support 110.

The assembly of figures 7-12 also comprises a cover 120 of plastic material, fixed to the interface support 110 by means of screws 121, which are inserted through through holes 122 made in the cover 120, and engage threaded holes 112 formed on the interface support 110. A seat 113 is also provided on the interface support 110, adapted to receive an electrical connector.

The assembly further comprises a protection ring 125, fixed to the interface support 110 on the opposite side with respect to the cover 120.

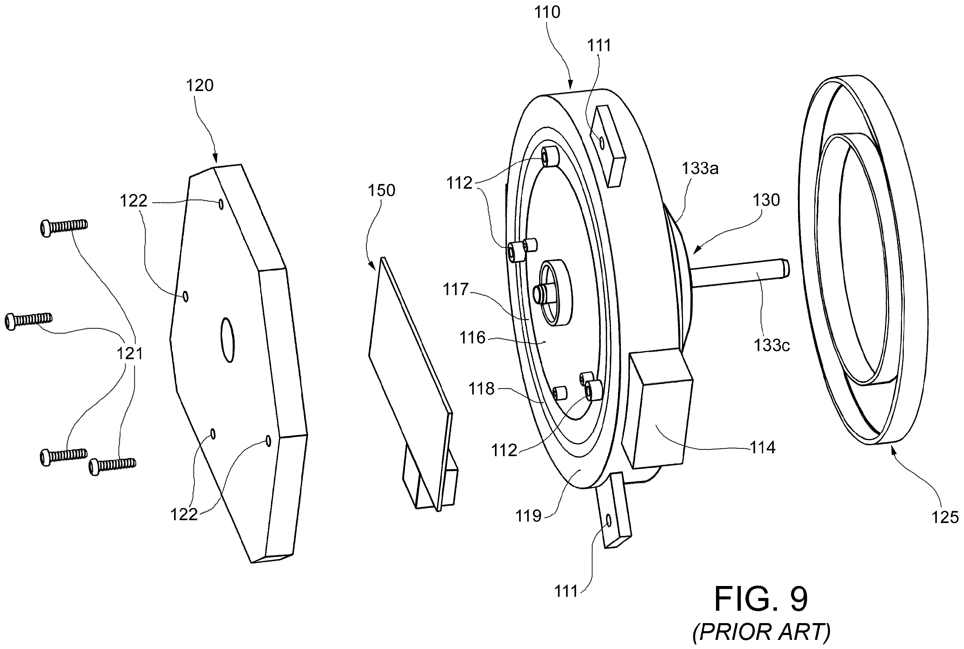

The interface support 110 and the protection ring 125 cooperate to define a containment space, inside which a brushless motor 130 is arranged, an exploded view of which is shown in figure 9.

The brushless motor 130 comprises a stator 131 comprising a stator body 131a and a stator winding (not shown) carried by the stator body. A through hole is formed in the stator body 131a. The stator 131 is fixed to the interface support 110, by means of screws 131b inserted in through holes 131c made in the stator body 131a and coupled to threaded holes 115 made on the central part 116 of the interface support 110.

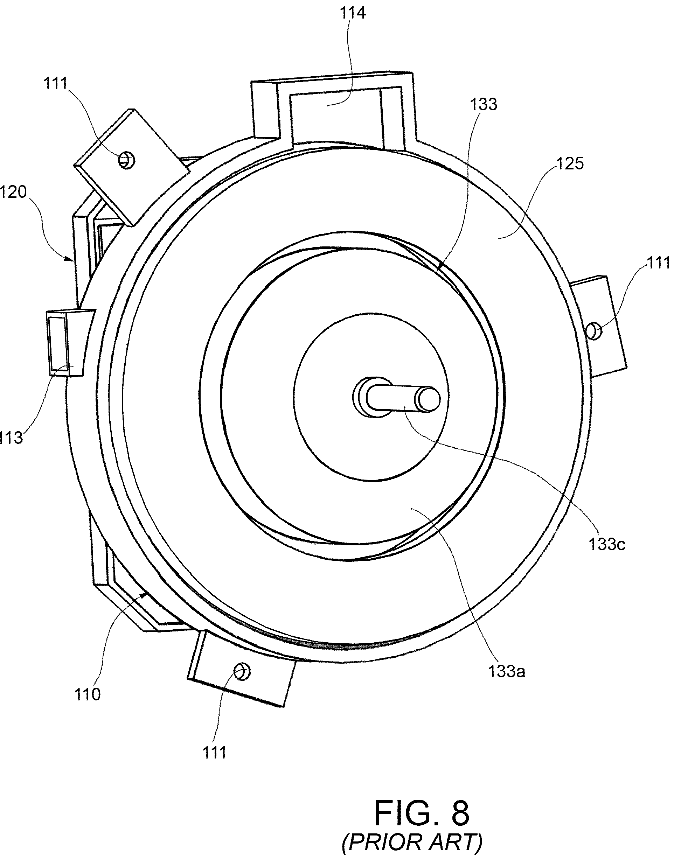

The brushless motor 130 also comprises a rotor 133, which comprises a bell body 133a which surrounds the stator 131. Permanent magnets (not shown) are arranged on the bell body 133a. The rotor 133 also comprises a shaft 133c integral in rotation with the bell body 133a. The shaft 133c is configured for mounting an electric blower impeller (not shown). As can be seen for example in figure 8, the rotor 133 projects in part through the central opening formed in the protection ring 125. The rotor 133 is mounted in rotation on the stator 131, through the shaft 133c which is inserted in bearings 132 mounted in the through hole formed in the stator body 131a.

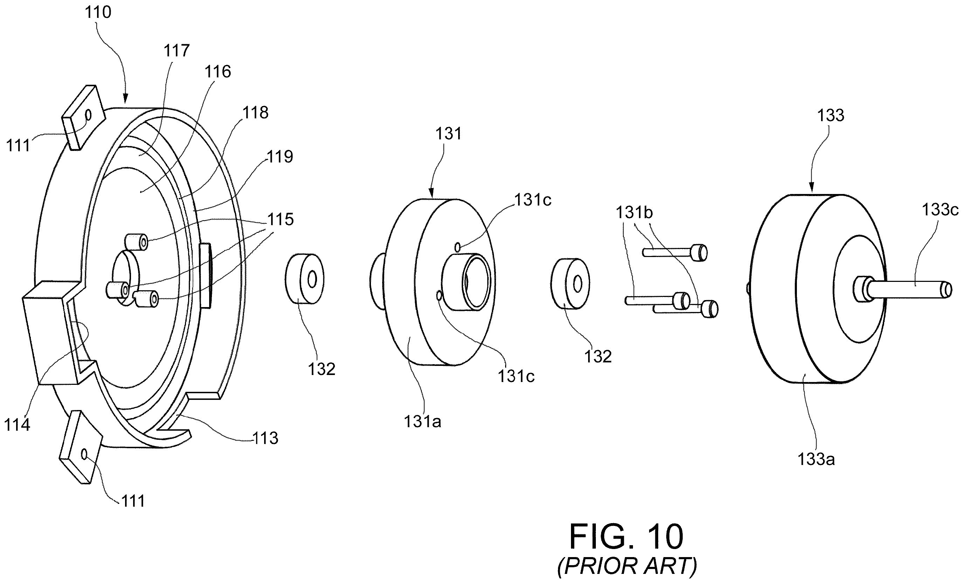

The central part 116 of metal material of the interface support 110 also serves as a dissipation plate and, as can be seen for example in figure 10, is placed facing the duct 114 for the cooling air.

Finally, the assembly comprises an electronic control plate 150, provided with circuits for managing the electric motor 130. The electronic control board 150 is fixed to the heat dissipation plate 116 by means of screws.

The assembly of figures 7-12 comprises a smaller number of assembled components with respect to the embodiment of figures 1-6, and is therefore affected by fewer problems related to possible dimensional errors. However, it cannot be used on multiple projects, since adapting to different installation conditions requires having to completely redefine the interface support.

An object of the present invention is to provide a solution which allows solving at least in part the drawbacks indicated above.

For this purpose, the object of the invention is a motor assembly for an electric blower, comprising:
- an interface support configured to be fixed to a housing of the electric blower and a cover fixed to the interface support, the interface support and the cover cooperating to define a containment space,- an interface support configured to be fixed to a box of the electric fan and a cover fixed to the interface support, the interface support presenting a circular shape, according to a seen in plan, and comprising a cooling air duct, in which the interface support and the cover cooperate to define a containment space,
- a brushless motor arranged within the containment space,
wherein the cooling air duct defines a radial extension with respect to the circular shape of the interface support, said circular shape being coaxial with the rotation axis of the brushless motor, wherein the assembly further comprises an adapter provided with fixing means for fixing the adapter to the box of the electric fan, said adapter having a seat adapted to receive the support interface so as to have a prismatic coupling between the seat and the interface support, wherein the adapter is configured to axially clamp a peripheral region of the interface support against the box of the electric fan to hold the motor unit to the electric fan box, said fixing means being arranged only radially outside a peripheral edge of the interface support.

Thanks to the configuration described above, the assembly can be used in different installation situations, simply by using adapters of different shapes and/or by rotating the assembly in the required angular position, thanks to the circular shape of the interface support the symmetry whereof is interrupted only by the radial extension in which the cooling air duct is obtained. If anything, the only modification that may be requested relates to the protruding appendage in which the air duct is provided for cooling the electronic plate that manages the electric motor.

The interface support may be fixed to the electric blower housing exclusively through the adapter.

According to an embodiment, the brushless motor comprises
a stator comprising a stator body and a stator winding carried by the stator body, and
a rotor comprising a bell body surrounding the stator and a shaft for mounting an impeller of the electric blower, said rotor partially protruding through an opening formed in the interface support.

Advantageously, the stator body is without parts protruding radially beyond the diameter of the bell body of the rotor.

The assembly may further comprise a dissipation plate fixed to the stator body. The stator body may comprise a plurality of mounting protrusions protruding axially from the stator body, the dissipation plate being fixed to the stator body through said mounting protrusions.

Further features and advantages of the motor assembly according to the invention will become apparent from the following detailed description of an embodiment of the invention, made with reference to the accompanying drawings, provided for illustrative and non-limiting purposes only, in which
figures 1 and 2 are perspective views of a first known motor assembly;
figure 3 is an exploded view of the motor assembly in figures 1 and 2;
figure 4 is an exploded view of a motor of the assembly of figures 1 and 2;
figures 5 and 6 are a cutaway view and a sectioned view, respectively, of the motor of figure 4;
figures 7 and 8 are perspective views of a second known motor assembly;
figure 9 is an exploded view of the motor assembly in figures 7 and 8;
figure 10 is an exploded view of a motor of the assembly of figures 7 and 8;
figures 11 and 12 are a cutaway view and a sectional view of the motor of figure 10, respectively;
figures 13 and 14 are perspective views of a motor assembly according to the invention;
figure 15 is an exploded view of the motor assembly in figures 13 and 14;
figure 16 is an exploded view of a motor of the assembly of figures 13 and 14;
figure 17 is a perspective view of the motor of figure 16;
figure 18 is a sectional view of the motor assembly of figures 13 and 14;
figure 19 is a plan view of the motor assembly of figures 13 and 14;
figures 20 and 21 are an exploded view and a perspective view showing the mounting of the motor assembly of figures 13 and 14 on the housing of an electric blower, respectively;
figure 22 is a view on an enlarged scale of a part of figure 18.

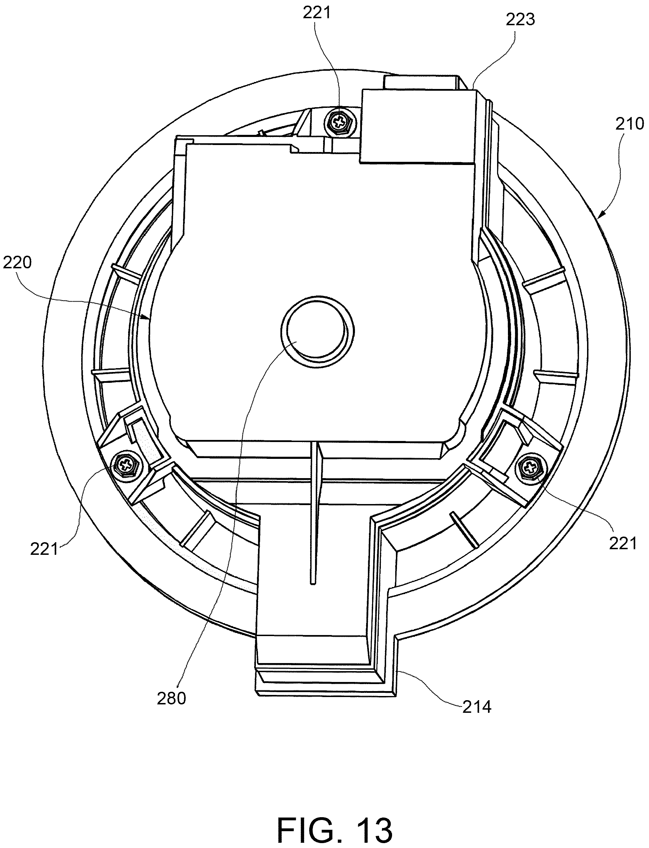

Figures 13 to 22 show a motor assembly according to the invention.

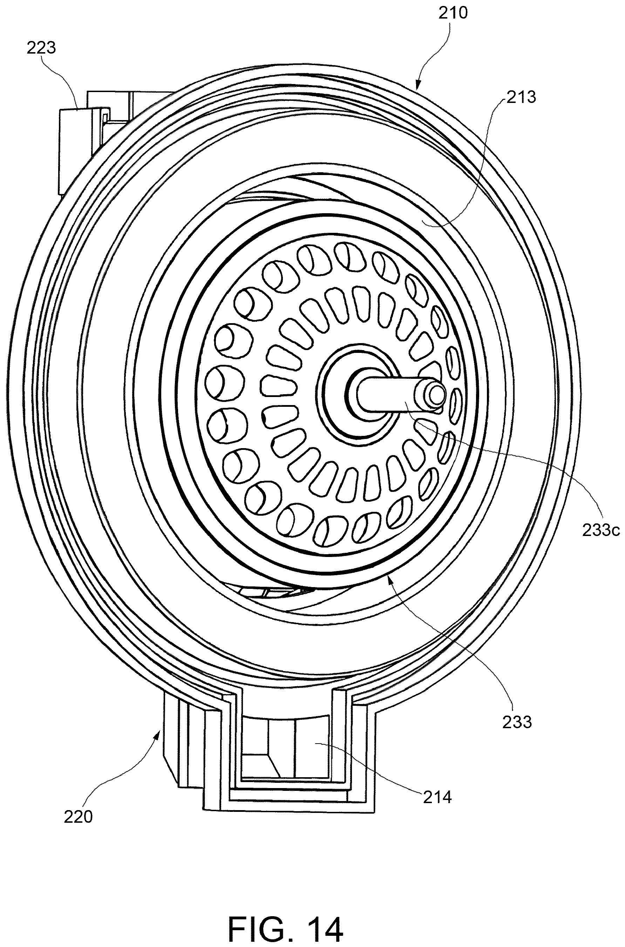

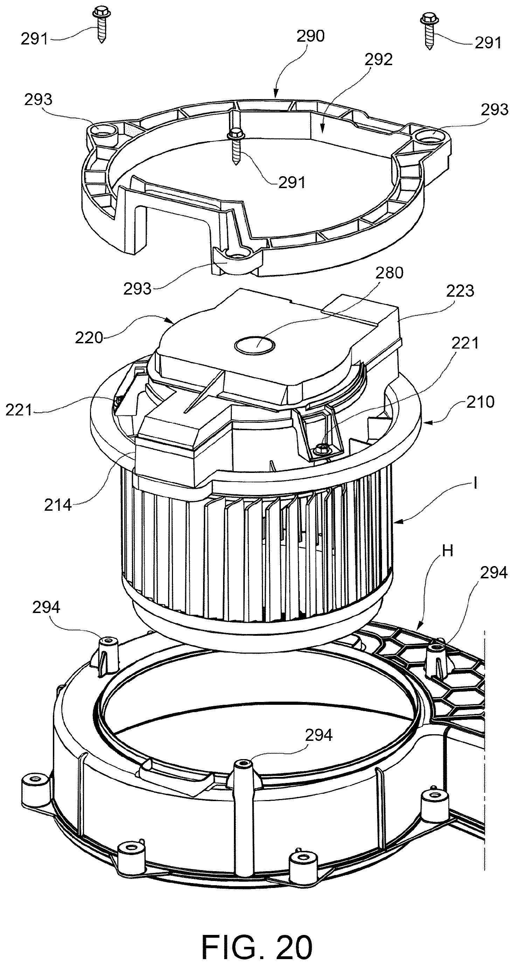

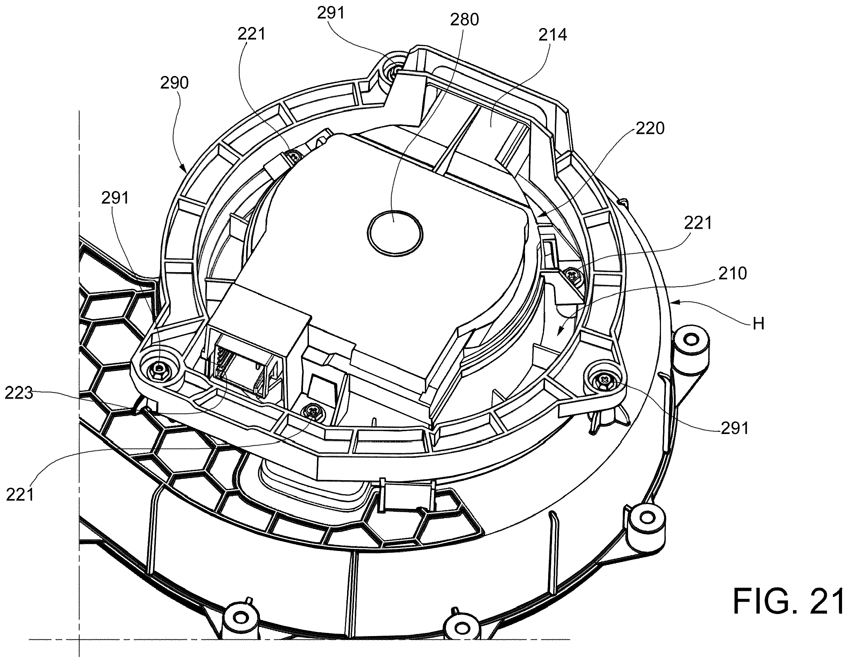

Such an assembly comprises an interface support 210 made of plastic material, configured to be fixed to the housing H of an electric blower (shown in figures 20 and 21). The manner in which the interface support 210 is fixed to the housing H will be described below. A central opening 213 is formed through the interface support 210, visible for example in figure 14.

The figures also show a duct 214 for the passage of cooling air, also formed in the interface support 210.

The assembly of figures 13-22 also comprises a cover 220 of plastic material, fixed to the interface support 210 by means of screws 221, which are inserted through through holes 222 made in the cover 220, and engage threaded holes 212 formed on the interface support 210. A seat 223 is also provided on the cover 220, adapted to receive an electrical connector.

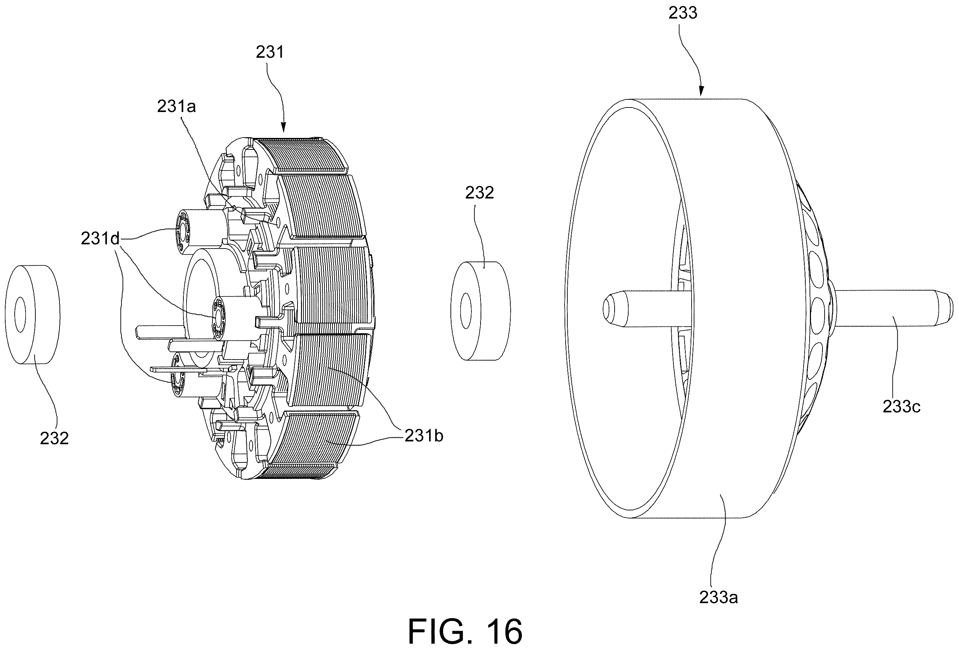

The interface support 210 and the cover 220 cooperate to define a containment space, inside which a brushless motor 230 is arranged, an exploded view of which is shown in figure 16.

The brushless motor 230 comprises a stator 231 comprising a stator body 231a and a stator winding 231b carried by the stator body 231a. A through hole is formed in the stator body 231a. The brushless motor 230 further comprises a rotor 233, which comprises a bell body 233a which surrounds the stator 231, and on which permanent magnets (not shown) are arranged. The rotor 233 also comprises a shaft 233c integral in rotation with the bell body 233a. The shaft 233c is configured for mounting an electric blower impeller I (shown in figure 20). As can be seen for example in figure 14, the rotor 233 projects in part through the opening 213 formed in the interface support 210. The rotor 233 is mounted in rotation on the stator 231, through the shaft 233c which is inserted in bearings 232 mounted in the through hole formed in the stator body 231a.

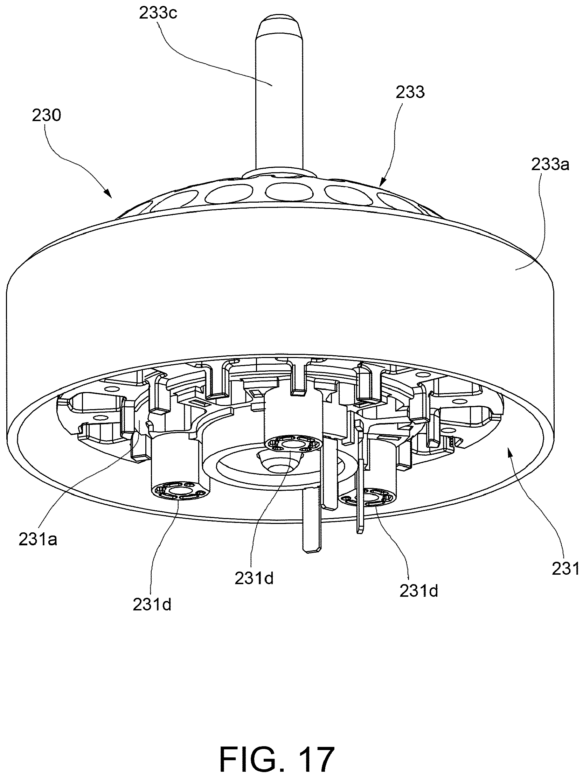

As can be seen, for example, in figure 17, the stator body 231a is without parts protruding radially beyond the outer diameter of the bell body 233a of the rotor 233.

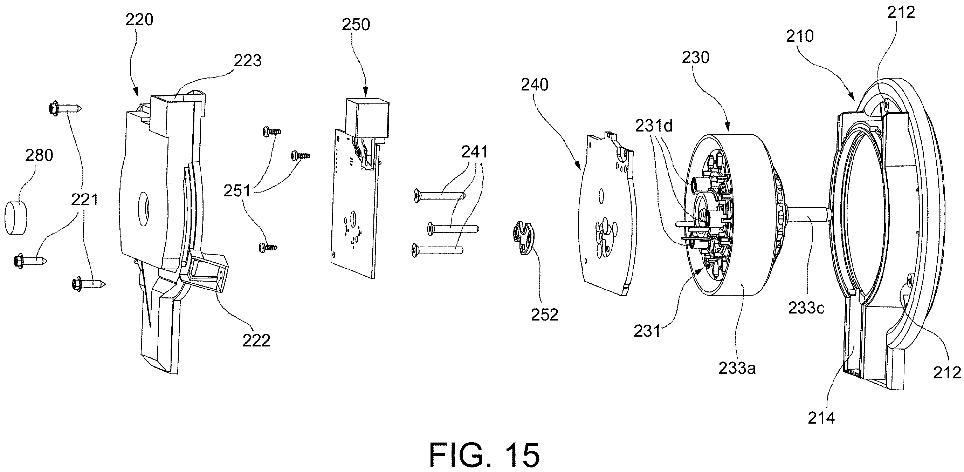

The assembly further comprises a dissipation plate 240 of metal material, fixed to the stator 231 by means of fixing means, for example screws 241, which are inserted in through holes made in the dissipation plate 240 and couple with threaded holes 231c formed in the stator body 231a at respective mounting protrusions 231d protruding axially from the rotor body 231a (see in particular figures 15, 16 and 17).

The dissipation plate 240 is arranged facing the duct 214 for the cooling air.

Finally, the assembly comprises an electronic control plate 250, provided with circuits for managing the electric motor 230. The electronic control board 250 is fixed to the heat dissipation plate 240 by means of screws 251. A gasket 252 is interposed between the electronic control plate 250 and the dissipation plate 252, at an opening of the dissipation plate 240 through which contacts of the electric motor 230 connected with the electronic control plate 250 pass.

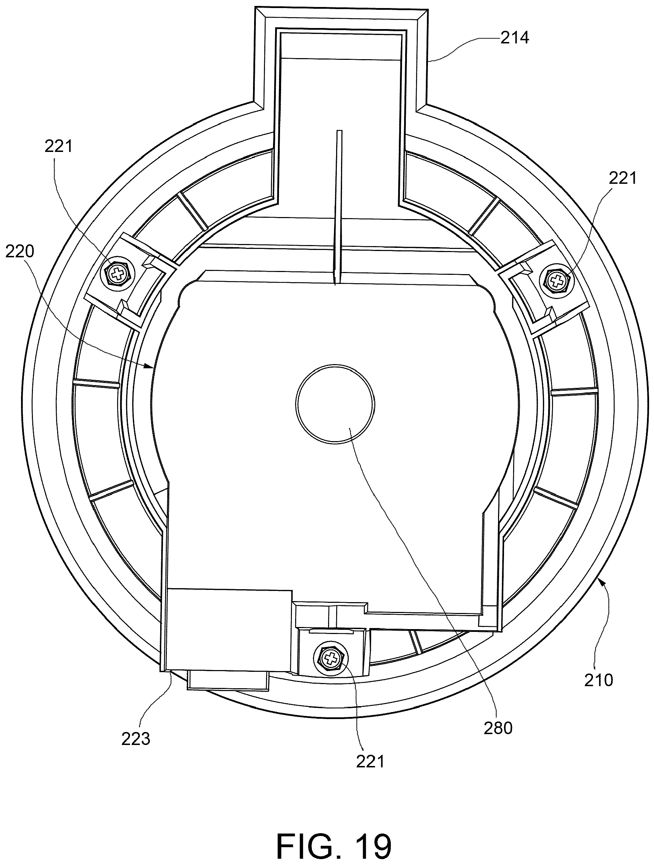

As can be seen in figure 19, the interface support 210 has, according to a plan view, a circular shape coaxial with the axis of rotation of the electric motor 230 and provided with a radial extension corresponding to the duct 214 of the cooling air.

With reference to figures 20 and 21, an adapter 290 is associated to the interface support 210, provided with fixing means, for example screws 291, for fixing the adapter 280 to the housing H of the electric blower. The screws 291 are inserted in through holes 293 formed in the adapter 290, and are coupled with threaded holes 294 formed on the housing H of the electric blower.

The adapter 290 has a seat 292 adapted to receive the interface support 210. The contour of the seat 292 must therefore be shaped in accordance with the profile of the interface support 210 so as to have a prismatic coupling between the seat 292 and the interface support 210. The adapter 290 is configured to axially clamp a peripheral region of the interface support 210 against the housing H of the electric blower to hold the motor assembly to the housing H of the electric blower.

The interface support 210 is fixed to the electric blower housing H exclusively through the axial tightening exerted by the adapter 290. In other words, there are no other elements present which anchor the interface support 210 to the housing H.

In this regard, the screws 291 are arranged radially outside the peripheral edge of the interface support 210.

Thanks to the configuration described above, the assembly can be used in different installation situations, simply by using adapters of different shapes and/or by rotating the assembly in the required angular position, thanks to the circular shape of the interface support the symmetry whereof is interrupted only by the radial extension in which the cooling air duct is obtained. If anything, the only modification that may be requested relates to the protruding appendage in which the duct for the cooling air is provided.

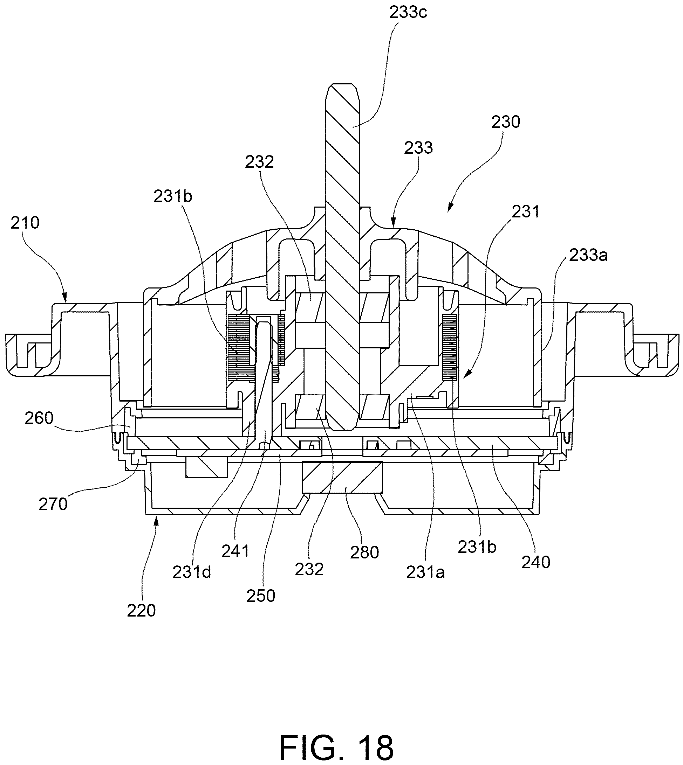

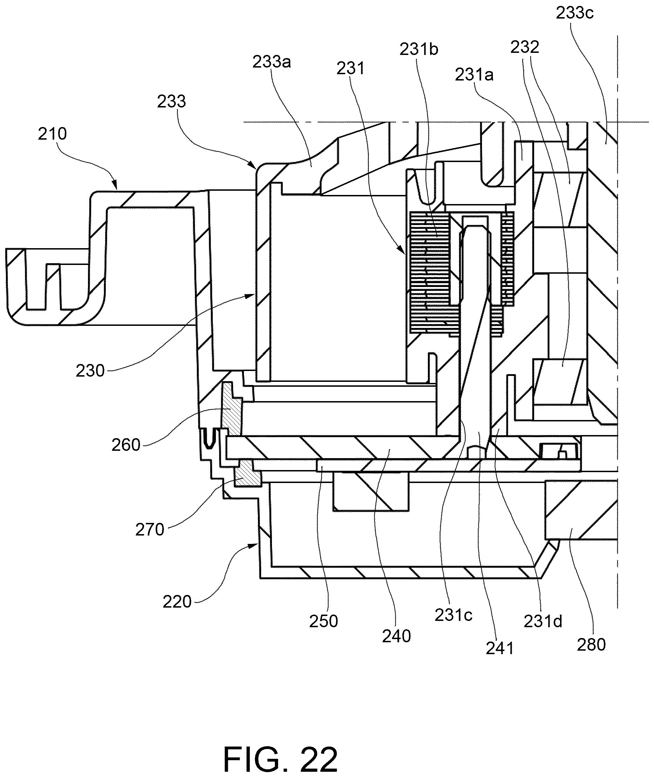

With reference in particular to figures 18 and 22, a first holding element 260 of elastomeric material is arranged on the interface support 210. This first holding element 260 may consist of a single assembled annular element, or obtained by bi-injection moulding, with a ring-shaped mould. Correspondingly, a second holding element 270 of elastomeric material is arranged on the cover 220. This second holding element 270 may consist of a single assembled annular element, or obtained by bi-injection moulding, with a ring-shaped mould. These first and second holding elements 260 and 270 axially clamp together a peripheral region of the dissipation plate 240 to retain the dissipation plate 240 and the brushless motor 230 to the interface support 210.

Advantageously, the first and second holding element 260, 270 are clamped against the dissipation plate 240 due to the closure of the screws 221 with which the cover 220 is fixed to the interface support 210.

The brushless motor 230 is thus retained at the interface support 210 exclusively through the dissipation plate 240. In other words, there are no other elements that hold the brushless motor 230 within the space defined by the interface support 210 and the cover 220.

Alternatively, the cover 220 may be fixed to the interface support 210 by alternative fixing means, for example by snap. Nevertheless, the tightening of the dissipation plate 240 between the first and the second holding element 260 and 270 may be obtained in a similar manner.

A plug 280 of elastomeric material, inserted in a central hole of the cover 220, may also couple in a central hole of the dissipation plate 240 to achieve a further centring and stabilizing effect of the dissipation plate 240 and of the motor 230.

It is understood that the invention is not limited to the embodiments described and illustrated herein, but is instead susceptible of modifications relating to the shape and arrangement of parts, constructional and operating details, according to the numerous possible variants which will appear suitable to the man skilled in the art and which are to be understood as included in the scope of the invention, as defined by the following claims.

## Claims

1. A motor assembly for an electric blower, comprising
- an interface support (210) configured to be fixed to a housing (H) of the electric blower and a cover (220) fixed to the interface support (210), the interface support (210) and the cover (220) cooperating to define a containment space,- an interface support (210) configured to be fixed to a box (H) of the electric fan and a cover (220) fixed to the interface support (210), the interface support (210) presenting a circular shape, according to a seen in plan, and comprising a cooling air duct (214), in which the interface support (210) and the cover (220) cooperate to define a containment space,
- a brushless motor (230) arranged within the containment space,
the assembly being **characterized in that** the cooling air duct (214) defines a radial extension with respect to the circular shape of the interface support (210), said circular shape being coaxial with the rotation axis of the brushless motor (230), wherein the assembly further comprises an adapter (290) provided with fixing means (291) for fixing the adapter (290) to the box (H) of the electric fan, said adapter having a seat (292) adapted to receive the support interface (210) so as to have a prismatic coupling between the seat (292) and the interface support (210), wherein the adapter (290) is configured to axially clamp a peripheral region of the interface support (210) against the box (H) of the electric fan to hold the motor unit to the electric fan box, said fixing means being arranged only radially outside a peripheral edge of the interface support (210).

2. An assembly according to claim 1, wherein the interface support (210) is fixable to the housing (H) of the electric blower exclusively through the adapter (290).

3. An assembly according to any of the preceding claims, wherein the brushless motor (230) comprises
a stator (231) comprising a stator body (231a) and a stator winding (231b) carried by the stator body (231a), and
a rotor (233) comprising a bell body (233a) surrounding the stator (231) and a shaft (233c) for mounting an impeller (I) of the electric blower, said rotor partially protruding through an opening (213) formed in the interface support (210).

4. An assembly according to claim 4, wherein the stator body (231a) is without parts protruding radially beyond the diameter of the bell body (233c) of the rotor (233).

5. An assembly according to claim 4 or 5, further comprising a heat dissipation plate (240) fixed to the stator body (231a).

6. An assembly according to claim 6, wherein the stator body (231a) comprises at least three mounting protrusions (231d) axially protruding from the stator body (231a), the heat dissipation plate (240) being fixed to the stator body (231a) through said mounting protrusions.

7. An assembly according to claim 7, wherein the heat dissipation plate (240) is fixed to the mounting protrusions (231d) through respective screws (241).

8. An assembly according to any of claims from 6 to 8, further comprising an electronic control board (250) fixed to the heat dissipation plate (240).

9. An assembly according to claim 9, wherein the electronic control board (250) is fixed to the heat dissipation plate (240) by means of screws (251).
